# NEUE EUROPÄISCHE PATENTSCHRIFT

(11) **EP 0 908 269 B2**
(45) Veröffentlichungstag und Bekanntmachung des Hinweises auf die Entscheidung über den Einspruch: **27.05.2009**
(45) Hinweis auf die Patenterteilung: 14.01.2004
(21) Anmeldenummer: 98118692.7
(22) Anmeldetag: 02.10.1998
(51) Int. Cl.: B23Q 39/02, B23Q 37/00, B23Q 7/02

(54) **Werkzeugmaschinengruppe mit zwei einander gegenüberstehenden Bearbeitungseinheiten**
Machine tool layout with two machining units arranged facing one another
Disposition de machines-outils avec deux unités d'usinage opposées

(30) Priorität: 07.10.1997 DE 19744157
(43) Veröffentlichungstag der Anmeldung: 14.04.1999
(73) Patentinhaber: Gebr. Heller Maschinenfabrik GmbH, D-72622 Nürtingen (DE)
(72) Erfinder: Frankenberger, Peter, 73760 Ostfildern (DE); Kalestra, Horst, 72654 Neckartenzlingen (DE); Liebrich, Wolfgang, 73110 Hattenhofen (DE)
(74) Vertreter: Jackisch-Kohl, Anna-Katharina

(56) Entgegenhaltungen:
- EP-A- 0 172 299
- FR-A- 2 631 869
- US-A- 4 485 911
- US-A- 5 265 497

## Beschreibung

Die Erfindung betrifft eine Werkzeugmaschinengruppe mit zwei einander gegenüberstehenden Bearbeitungseinheiten nach dem Oberbegriff des Anspruches 1.

Die nach Fertigungsstückzahlen und werkstückspezifischer Vielfalt sehr unterschiedlichen Aufgaben in der spanenden Fertigung können nur durch ein breites Angebot entsprechend angepaßter Werkzeugmaschinentypen gelöst werden. Während zum Beispiel bei geringen Fertigungsstückzahlen und hoher Teilevielfalt ein einzelnes NC-Bearbeitungszentrum zum Einsatz kommt, werden hohe Fertigungsstückzahlen des gleichen Werkstückes auf Transferstraßen produziert.

Zwischen diesen Extremen in der Fertigungstechnik werden flexible Fertigungszellen und -systeme eingesetzt, die hinsichtlich der technologischen Fertigungsaufgabe und den in möglichst beliebiger Reihenfolge durchlaufenden und zu bearbeitenden Werkstücken anpassungsfähig sind. Für die Produktivität ist entscheidend, wie viele Spindeln gleichzeitig am Werkstück im Eingriff sind. Bei der sogenannten Mehrseitenbearbeitung arbeiten mehrere Spindeln oder Spindelgruppen einer einzigen Bearbeitungseinheit von mehreren Seiten gleichzeitig an demselben Werkstück. Dieses Verfahren kann nur bei relativ großen Werkstücken eingesetzt werden, da der erforderliche Bauraum für die konzentrisch angreifenden Spindeln vorhanden sein muß.

Bei der sogenannten Mehrstationenbearbeitung führt man jeweils ein Werkstück im Rund- oder im Längstakt an verschiedenen Bearbeitungsstationen vorbei. Dieses Verfahren ist wegen des Transport-, Positionier- und Spannaufwandes von jeweils einer Palette und Spannvorrichtung je Bearbeitungs- und Lade/Entladestation eher für große Stückzahlen bei kleinem Werkstückspektrum geeignet, da sonst erhebliche logistische Probleme die Wirtschaftlichkeit stark einschränken.

Bei Rundtaktmaschinen mit mehreren Bearbeitungsstationen werden schnell Maschinenabmessungen erreicht, die von der mechanischen Bearbeitung beim Hersteller über erforderliche Spezialtransporter bis zum Platzbedarf beim Kunden Probleme aufwerfen. Außerdem ist bei einfachen konventionellen Rundtaktmaschinen immer nur eine außen liegende Seite des Werkstückes für die Bearbeitungseinheiten zugänglich. Es sind zwar auch Rundtische als Werkstückträger bekannt, die jedoch konstruktiv und wirtschaftlich sehr aufwendig sind.

Bei allen flexiblen Werkzeugmaschinen müssen Werkzeugwechsel vorgenommen werden, die in der Regel eine Zeit von 3 bis 5 s benötigen, die dann für die Werkstückbearbeitung verloren geht. Es wurden daher Maschinen mit zwei Spindelstöcken entwickelt. Die unproduktiven Nebenzeiten des Werkzeugwechsels werden durch den abwechselnden Einsatz des jeweils mit dem neuen Werkzeug bestückten und auf Arbeitsdrehzahl beschleunigten Spindelkopfes praktisch eliminiert. Selbst bei langwierigen Bearbeitungsoperationen kann jedoch immer nur eine Spindel am Werkstück im Einsatz sein, da das Werkstück eine oder mehrere Achsbewegungen ausführt.

Bei der gattungsgemäßen Werkzeugmaschinengrupppe (FR-A-2 631 869) wird das zu bearbeitende Werkstück auf einem Rundtischträger aufgespannt, der um eine vertikale Achse drehbar und fest mit der Maschine verbunden ist. Mit einer Beladeeinrichtung werden die Werkstücke längs des Umfanges des Rundtischträgers beladen.

Der Erfindung liegt die Aufgabe zugrunde, die gattungsgemäße Werkzeugmaschinengruppe so auszubilden, daß sie für hohe Auftragswechselraten geeignet ist und sowohl als Stand-Alone-Maschine als auch in Verkettung mit anderen Fertigungszellen oder Bearbeitungszentren arbeiten kann.

Diese Aufgabe wird bei der gattungsgemäßen Werkzeugmaschinengruppe erfindungsgemäß mit den kennzeichnenden Merkmalen des Anspruches 1 gelöst.

Bei der erfindungsgemäßen Werkzeugmaschinengruppe sind die Werkzeuge der beiden Bearbeitungseinheiten vorzugsweise gleichzeitig am Werkstück in Eingriff. Dadurch wird eine hohe Durchlaufgeschwindigkeit und Produktivität erzielt. Die beiden Bearbeitungseinheiten bilden eine Fertigungszelle, in der eine simultane Mehrseitenbearbeitung am Werkstück möglich ist. Die Werkstücke sitzen auf den Paletten, die mit dem Rundtischträger in die Bearbeitungsstation zwischen den beiden Bearbeitungseinheiten transportiert werden. Dabei dreht der Rundtischträger um die vorzugsweise vertikale Achse, die mit Abstand von der zwischen den Bearbeitungseinheiten befindlichen Mittelachse liegt. Da das Werkstück während der simultanen Mehrseitenbearbeitung in der Bearbeitungsstation verbleibt, können Positionierungsabweichungen des Werkstückes nicht auftreten, wie dies sonst beim Wechsel zwischen verschiedenen Bearbeitungsstationen üblich ist. Die auf das Werkstück wirkenden Bearbeitungskräfte, die zu Deformationen führen, werden zumindest teilweise kompensiert. Da die Spannvorrichtung auf der Palette aufgenommen ist, können die unterschiedlichsten Werkstücke in der Bearbeitungsstation zwischen den beiden Bearbeitungseinheiten bearbeitet werden. Wird das Werkstück oder die Werkstückgruppe von den Werkzeugen beider Bearbeitungseinheiten bearbeitet, können unterschiedlichste Werkzeuge an verschiedenen Werkzeugseiten arbeiten. Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen
- Fig. 1: eine Seitenansicht einer erfindungsgemäßen Werkzeugmaschinengruppe,
- Fig. 2: eine Draufsicht auf die Werkzeugmaschinengruppe gemäß Fig. 1,
- Fig. 3: eine Stirnansicht der Werkzeugmaschinengruppe gemäß Fig. 1,
- Fig. 4: einen Teil einer Bearbeitungseinheit der erfindungsgemäßen Werkzeugmaschinengruppe mit einem räumlichen Revolverkopf,
- Fig. 5: in einer Darstellung entsprechend Fig. 4 eine Bearbeitungseinheit der erfindungsgemäßen Werkzeugmaschinengruppe mit einem Mehrspindelkopf,
- Fig. 6: in Draufsicht die Ankoppelung einer erfindungsgemäßen Werkzeugmaschinengruppe an einen Rundspeicher,
- Fig. 7: in Draufsicht eine erfindungsgemäße Werkzeugmaschinengruppe zur Ankoppelung an eine Linearverkettung,
- Fig. 8: eine Draufsicht auf eine zweite Ausführungsform einer erfindungsgemäßen Werkzeugmaschinengruppe,
- Fig. 9: eine Seitenansicht der Werkzeugmaschinengruppe gemäß Fig. 8.

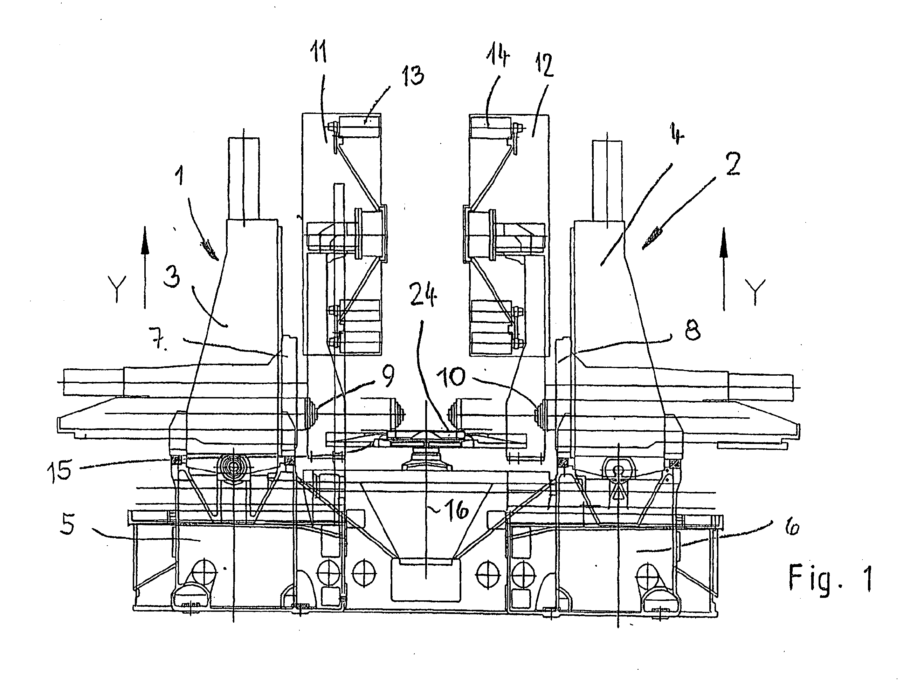

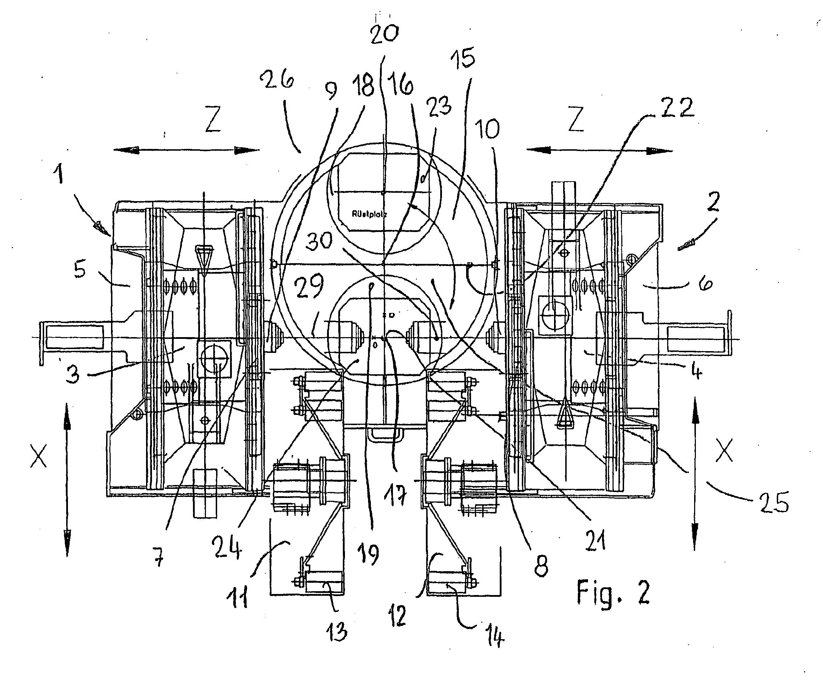

Die Werkzeugmaschinengruppe hat zwei Bearbeitungseinheiten 1, 2, die einander mit Abstand gegenüberstehen. Die beiden Bearbeitungseinheiten 1, 2 sind vorteilhaft gleich ausgebildet, jedoch spiegelsymmetrisch zueinander angeordnet. Selbstverständlich können die Bearbeitungseinheiten 1, 2 aber auch unterschiedlich ausgebildet sein. Jede Bearbeitungseinheit 1, 2 hat einen Ständer 3, 4, der auf einem Bett 5, 6 gelagert ist. An den einander zugewandten Stirnseiten der Ständer 3, 4 ist jeweils ein Schlitten 7, 8 in Y-Richtung verfahrbar angeordnet. Jeder Schlitten 7, 8 trägt eine Spindel 9, 10, die sich in Z-Richtung erstreckt. In die Spindeln 9, 10 können Werkzeuge zur Bearbeitung eines Werkstückes oder einer Werkstückgruppe eingesetzt werden. Durch vorzugsweise eine Pinolenbewegung können die Spindeln 9, 10 in Z-Richtung verschoben werden. In den Fig. 1 und 2 sind zwei Stellungen der Spindeln 9, 10 eingezeichnet. Mit den Schlitten 7, 8 können die Spindeln 9, 10 in Y-Richtung verstellt werden. Eine Verstellung in X-Richtung ist dadurch möglich, daß die Ständer 3, 4 auf dem Bett 5, 6 in X-Richtung verfahrbar sind.

Wenn die beiden Bearbeitungseinheiten 1, 2 identisch ausgebildet sind, ist eine Links- bzw. Rechtsausführung nicht erforderlich. Aufgrund der beschriebenen Bewegungsmöglichkeiten können die beiden Spindeln 7, 8 in einem rechtwinkligen kartesischen Koordinatensystem in der X-, Y- und Z-Achse bewegt werden.

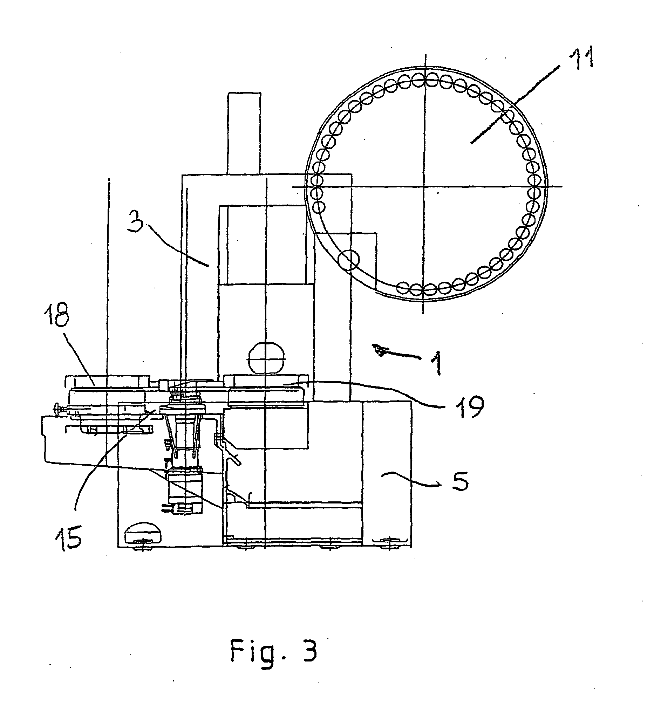

Jede Bearbeitungseinheit 1, 2 ist mit einem Werkzeugmagazin 11, 12 versehen, die im Ausführungsbeispiel nach den Fig. 1 bis 3 Rundmagazine sind, die um eine in Z-Richtung liegende Achse drehbar am Ständer 3, 4 der jeweiligen Bearbeitungseinheit 1, 2 gelagert sind. Die beiden Werkzeugmagazine 11, 12 sind, wie sich aus Fig. 1 ergibt, an den einander zugewandten Seiten der Bearbeitungseinheiten 1, 2 angeordnet. In den Werkzeugmagazinen 11, 12 sind Werkzeuge 13, 14 untergebracht, die in bekannter Weise mit einem (nicht dargestellten) Wechsler im Pick-up-Verfahren in die jeweilige Spindel 9, 10 eingewechselt werden können. Die Werkzeugmagazine 11, 12 sind in bekannter Weise ausgebildet und werden motorisch drehbar angetrieben. Die Drehachsen der Werkzeugmagazine 11, 12 sind im oberen Bereich der Ständer 3, 4 vorgesehen (Fig. 1). Die Werkzeugmagazine 11, 12 können unmittelbar an den Ständern 3, 4 drehbar gelagert sein. Es ist aber auch möglich, die Werkzeugmagazine 11, 12 auf zusätzlichen Ständern zu lagern. Diese zusätzlichen Ständer sind dann vorteilhaft mit den Ständern 3, 4 fest verbunden, so daß beide Ständer gemeinsam in X-Richtung verfahren werden können.

In den Bereich zwischen den beiden Bearbeitungseinheiten 1, 2 ragt ein Rundtisch 15, der um eine vertikale Achse 16 drehbar ist. Sie liegt, in Draufsicht gesehen (Fig. 2), mit Abstand zur Mittelachse 17 des Arbeitsbereiches zwischen den beiden Bearbeitungseinheiten 1, 2. Dadurch ragt der Rundtisch 15 seitlich über die beiden Bearbeitungseinheiten 1, 2.

Auf dem Rundtisch 15 sind diametral einander gegenüberliegend zwei kleinere Rundtische 18 und 19 vorgesehen, die um zueinander parallele, in Y-Richtung liegende Achsen 20 und 21 drehbar sind. Die Drehachsen 20, 21 haben jeweils gleichen Abstand von der Drehachse 16 des Rundtisches 15. Im dargestellten Ausführungsbeispiel befinden sich die beiden Rundtische 18, 19 beiderseits einer Trennwand 22, die in Vertikalrichtung verläuft und diametral auf dem Rundtisch 15 angeordnet ist. Durch die Trennwand 22 wird der Rundtisch 15 in zwei etwa halbkreisförmige Bereiche aufgeteilt, in denen sich jeweils der eine Rundtisch 18 bzw. 19 befindet. Auf den Rundtischen 18, 19 können Wechselpaletten 23, 24 als Werkstückträger aufgebaut werden. Ein Werkstückträger befindet sich jeweils in der Bearbeitungsstation 25 zwischen den beiden Bearbeitungseinheiten 1, 2, während der andere Werkstückträger auf einem Rüstplatz 26 be- und entladen werden kann. Die Bearbeitungsstation 25 und der Rüstplatz 26 sind durch die Trennwand 22 voneinander getrennt. Die Trennwand 22 verhindert, daß Späne aus dem Bereich der Bearbeitungsstation 25 in den Bereich des Rüstplatzes 26 gelangen.

Bei entsprechendem Durchmesser des Rundtisches 15 können auf ihm auch mehr als zwei weitere Rundtische 18, 19 gelagert sein. In diesem Falle befinden sich wenigstens zwei Werkstückträger im Bereich des Rüstplatzes 26, an dem die entsprechenden Werkzeugträger be- und entladen werden können. Die Rundtische 18, 19 können als Teiltische ausgebildet oder mit einer NC-Drehachse ausgerüstet sein.

Die Rundtische 18, 19 werden um ihre Achsen 20, 21 drehbar angetrieben. Da diese Rundtische 18, 19 auf dem Rundtisch 15 gelagert sind, führen die Rundtische 18, 19 eine Planetenbewegung um die zentral zwischen den beiden Bearbeitungseinheiten 1, 2 liegende Achse 17 aus. Auf den Wechselpaletten 23, 24 können unterschiedliche Werkstücke aufgespannt werden, so daß in der Bearbeitungsstation 25 nacheinander unterschiedlichste Werkstücke bearbeitet werden können.

Die Spindeln 9, 10 der Bearbeitungseinheiten 1, 2 sind vorteilhaft in dem beschriebenen dreiachsigen kartesischen Koordinatensystem NC-gesteuert beweglich. Es ist zusätzlich möglich, weitere Freiheitsgrade in Form von Verdrehungen vorzusehen, so daß die in die Spindeln 9, 10 eingesetzten Werkzeuge auch Winkellagen in bezug auf den X-, Y-, Z-Raum einnehmen können.

Die Bearbeitungsstation 25 zwischen den beiden Bearbeitungseinheiten 1, 2 ist durch die Trennwand 22 gegen den Rüstplatz 26 abgetrennt. Die Trennwand 22 verläuft mit Abstand von der zentralen Mittelachse 17 der Bearbeitungsstation 25. Am Rüstplatz 26, der der Bearbeitungsstation 25 gegenüberliegt, können die notwendigen Lade-/Rüst- und Entladearbeiten vorgenommen werden, während das in der Bearbeitungsstation 25 befindliche Werkstück mit den in die Spindeln 9, 10 eingesetzten Werkzeugen bearbeitet wird.

Die Bearbeitungsstation 25, die den Arbeitsraum der Werkzeugmaschinengruppe bildet, ist vorteilhaft durch (nicht dargestellte) Schutztüren für den Bediener als Spänefangraum ausgebildet.

Die Wechselpaletten 23, 24 werden vorteilhaft durch eine automatische Ladeeinrichtung gefördert.

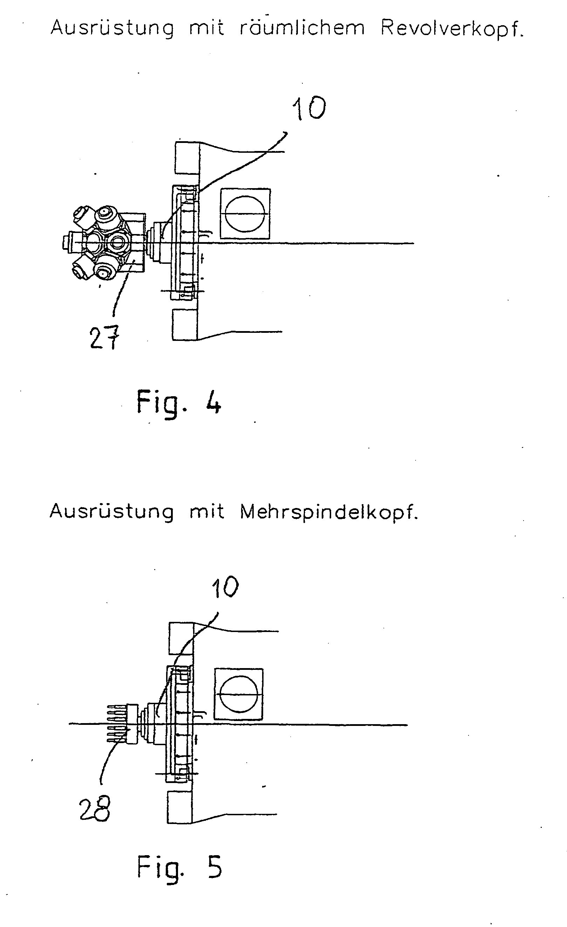

Wie Fig. 4 beispielhaft zeigt, können in die Spindeln 9, 10 räumliche Revolverköpfe 27 eingesetzt werden. Ebenso ist es möglich, in die Spindeln 9, 10 Mehrspindelköpfe 28 (Fig. 5) einzuspannen. Mit den verschiedenen Werkzeugen des Revolverkopfes 27 bzw. des Mehrspindelkopfes 28 können die Werkstücke optimal bearbeitet werden. In die Spindeln 9, 10 können selbstverständlich auch Einzelwerkzeuge eingesetzt werden. Die jeweils erforderlichen Werkzeuge bzw. Köpfe werden den der jeweiligen Bearbeitungseinheit 1, 2 zugeordneten Werkzeugmagazinen 11, 12 entnommen.

Die Spindelachsen 29, 30 (Fig. 2) der Bearbeitungseinheiten 1, 2 bilden die Tangenten einer gedachten Kreisbogenschar, deren gemeinsame Zentren auf der Achse 16 des Rundtisches 15 liegen.

Die Bearbeitungseinheiten 1, 2 werden bezüglich Arbeitsbereich, Geschwindigkeit der Linear- und Drehachsen sowie bezüglich der Leistung an die unterschiedlichen, zu erledigenden Bearbeitungsaufgaben angepaßt.

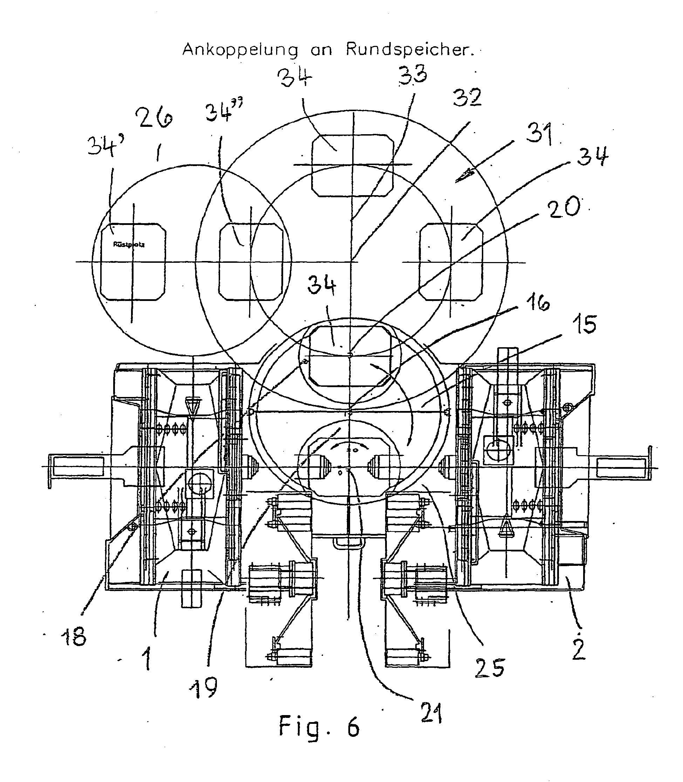

Fig. 6 zeigt die Anbindung der beiden Bearbeitungseinheiten 1, 2 an einen Rundspeicher 31, der um eine vertikale Achse 32 drehbar angetrieben werden kann. Die Drehachse 32 befindet sich im Bereich neben den beiden Bearbeitungseinheiten 1, 2. Wie Fig. 6 entnommen werden kann, liegen die Drehachsen 32 und 16 des Rundspeichers 31 und des Rundtisches 15 in einer gemeinsamen Vertikalebene 33, die mittig zwischen den beiden Bearbeitungseinheiten 1, 2 verläuft. Vorteilhaft liegen auch die Drehachsen 20 und 21 der Rundtische 18, 19 in der Vertikalebene 33, wenn das Werkstück in der Bearbeitungsstation 25 bearbeitet wird. In Draufsicht gemäß Fig. 6 gesehen, ragt der Rundspeicher 31 bis nahe an die vertikale Drehachse 16 des Rundtisches 15. Auf dem Rundspeicher 31 sind mehrere Wechselpaletten 34 gelagert, auf welche die zu bearbeitenden Werkstücke aufgespannt werden können. Der Rüstplatz 26 befindet sich bei einer solchen Ausbildung nicht mehr in Höhe der Bearbeitungsstation 25, sondern neben der Bearbeitungseinheit 1. Am Rüstplatz 26 wird auf der Wechselpalette 34' das entsprechende Werkzeug aufgespannt. Die Wechselpalette 34' mit dem aufgespannten Werkstück wird dann an der Stelle 34" auf den Rundspeicher 31 gebracht. Von ihm gelangt die jeweilige Wechselpalette nach einer entsprechenden Drehung des Rundspeichers 31 um die Achse 32 zum Rundtisch 15. Von ihm wird die Wechselpalette 34 übernommen. Durch Drehen des Rundtisches 15 um seine Achse 16 wird dann die Wechselpalette 34 mit dem aufgespannten Werkstück in die Bearbeitungsstation 25 zwischen den beiden Bearbeitungseinheiten 1, 2 gebracht. Das zuvor von den Werkzeugen der Spindel 9, 10 bearbeitete Werkstück wird hierbei zusammen mit der zugehörigen Wechselpalette auf den Rundtisch 31 gefördert und dort in geeigneter Weise gehalten. Beim Weiterdrehen des Rundtisches 31 gelangt dann die Wechselpalette mit dem bearbeiteten Werkstück in die Rüststation 26. Im dargestellten Ausführungsbeispiel sind auf dem Rundspeicher 31 vier Wechselpaletten 34 im Winkelabstand von jeweils 90° zueinander angeordnet. Darum wird der Rundspeicher 31 jeweils um 90° gedreht, um nacheinander die jeweiligen Wechselpaletten zum Rundtisch 15 zu bringen. Er wird jeweils um 180° um seine Achse 16 gedreht, um die Wechselpalette mit dem Werkstück in die Bearbeitungsstation 25 zu transportieren. Bei der 180°-Drehung des Rundtisches 15 wird die Wechselpalette mit dem bearbeiteten Werkstück auf den Rundspeicher 31 transportiert. Wenn er anschließend im Uhrzeigersinn gemäß Fig. 6 um 90° weitergetaktet wird, gelangt die Wechselpalette mit dem bearbeiteten Werkstück zur Rüststation 26. Dort kann die Wechselpalette mit dem bearbeiteten Werkstück entnommen bzw. die Wechselpalette 34' mit dem aufgespannten, noch zu bearbeitenden Werkstück auf den Rundspeicher 31 transportiert werden.

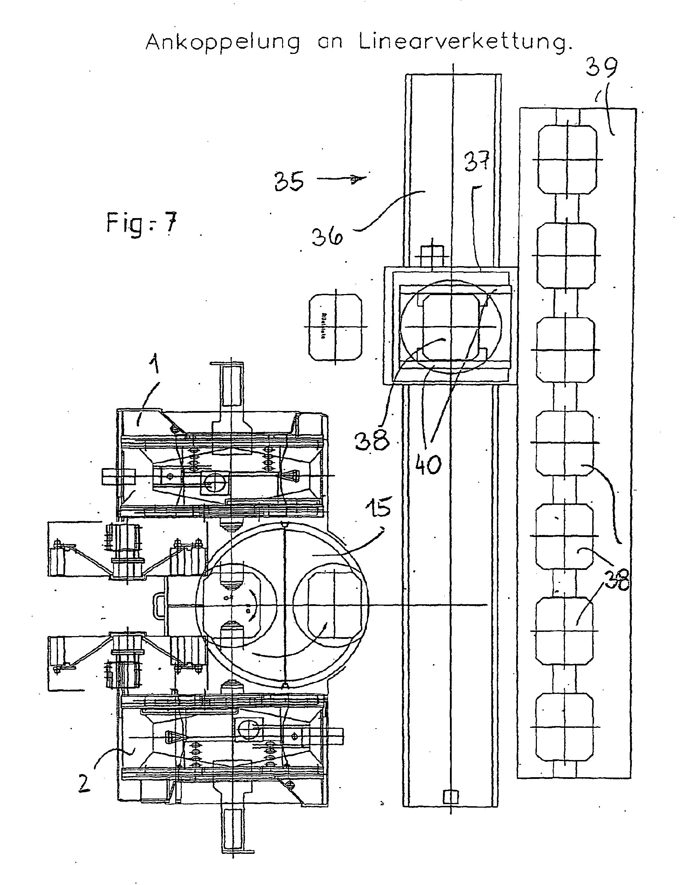

Fig. 7 zeigt beispielhaft die Ankoppelung der Werkzeugmaschinengruppe an eine Linearverkettung 35. Die Werkzeugmaschinengruppe mit den beiden Bearbeitungseinheiten 1, 2 befindet sich neben der Linearverkettung 35. Sie weist eine Bahn 36 auf, auf der ein Schlitten 37 mit einem Linearantrieb verfahrbar ist. Auf dem Schlitten 37 kann eine Wechselpalette 38 montiert werden, auf der das jeweils zu bearbeitende Werkstück aufgespannt werden kann. Auf der von der Werkzeugmaschinengruppe abgewandten Seite der Bahn 36 befindet sich ein Palettenspeicher 39, in dem in Fahrtrichtung des Schlittens 37 hintereinander Wechselpaletten 38 gelagert sind.

Der Schlitten 37 ist mit senkrecht zu seiner Verfahrrichtung liegenden Führungen 40 versehen, über welche die Paletten 38 einfach vom Palettenspeicher 39 auf den Schlitten 37 und von ihm auf den Rundtisch 15 transportiert werden können. Die Werkzeugmaschinengruppe ist gleich ausgebildet, wie anhand der Fig. 1 bis 3 im einzelnen erläutert worden ist.

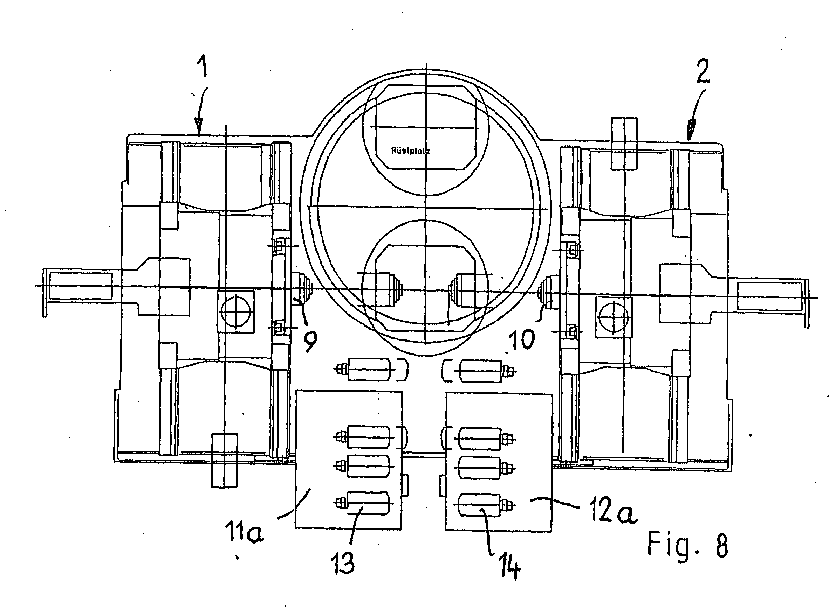

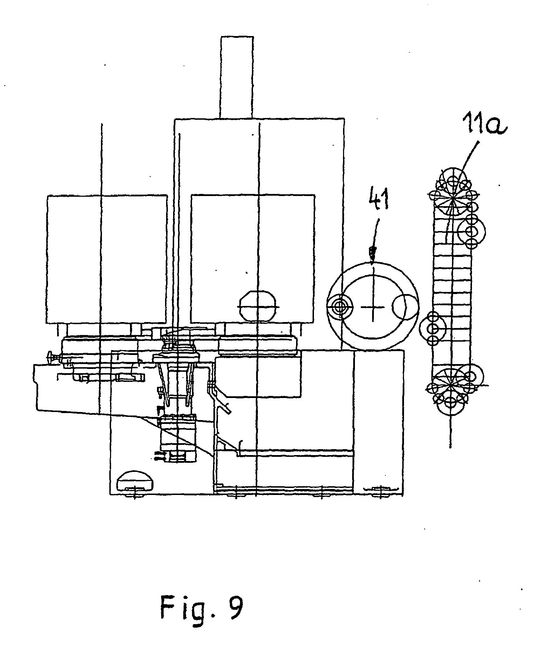

Bei der Ausführungsform nach den Fig. 8 und 9 haben die Bearbeitungseinheiten 1, 2 Kettenmagazine 11a, 12a als Werkzeugmagazin, die mit einer oder mehreren Schleifen ausgebildet sind. Die Werkzeuge 13, 14 werden mittels eines ein- oder zweiarmigen schwenkbaren Greifers 41 (Fig. 9) zwischen dem Kettenmagazin 11a, 12a und der jeweiligen Spindel 9, 10 der Bearbeitungseinheiten 1, 2 ausgewechselt. Der Einsatz eines zweiarmigen Greifers 41 hat den Vorteil, daß in einem Arbeitsgang das in der jeweiligen Spindel 9, 10 und im jeweiligen Kettenmagazin 11a, 12a befindliche Werkzeug erfaßt und nach einer 180°-Schwenkung gegeneinander ausgetauscht werden können. Im übrigen ist die Werkzeugmaschinengruppe gleich ausgebildet wie das Ausführungsbeispiel nach den Fig. 1 bis 3.

Bei den beschriebenen Ausführungsformen wird durch den gleichzeitigen Eingriff mehrerer Bearbeitungseinheiten 1, 2 bzw. der in ihre Spindeln 9, 10 eingespannten Werkzeuge am Werkstück eine hohe Durchlaufgeschwindigkeit und Produktivität erreicht. Positionsabweichungen des Werkstückes zwischen verschiedenen Bearbeitungsstationen können nicht auftreten, da das Werkstück während der Bearbeitung den Bereich zwischen den beiden Bearbeitungseinheiten 1, 2 nicht verläßt. Die auf das Werkstück wirkenden Bearbeitungskräfte, die zu Deformationen führen, werden zumindest teilweise kompensiert, da sich die Bearbeitungseinheiten 1, 2 und damit ihre Spindeln 9, 10 auf einander gegenüberliegenden Seiten des zu bearbeitenden Werkstückes befinden. Sämtliche Bearbeitungsbewegungen werden vom Werkzeug ausgeführt. In X-Richtung wird der Ständer 3, 4 der jeweiligen Bearbeitungseinheit 1, 2 verfahren. In Y-Richtung erfolgt die Bearbeitungsbewegung durch Verfahren des die Spindel 9, 10 tragenden Schlittens 7, 8. Die Bearbeitungsbewegung in Z-Richtung erfolgt vorzugsweise durch die Pinolenbewegung der Spindeln 9, 10. Da die Bearbeitungsbewegungen vom Werkzeug vorgenommen werden, können unterschiedliche Werkstückmassen die Relativbewegung zwischen Werkzeug und Werkstück dynamisch nicht ungünstig beeinflussen.

Während der Bearbeitung des Werkstückes in der Bearbeitungsstation 25 können am stationären Rüstplatz 26 Meß-, Kontroll-, Lade-, Spann-, Entspann- und Entladevorgänge bequem ausgeführt werden. Die beiden Bearbeitungseinheiten 1, 2 können bei identischer Ausführung kostengünstig gefertigt werden. Haben die beiden Bearbeitungseinheiten 1, 2 unterschiedliche Ausbildung, können sie spezifischen Bearbeitungsaufgaben optimal angepaßt werden. Die Bearbeitungsmaschinen 1, 2 können sequentiell arbeiten, z.B. bei jeweils unterschiedlichen Winkeleinstellungen der Rundtische 18, 19.

## Patentansprüche

1. Werkzeugmaschinengruppe mit zwei einander gegenüberstehenden Bearbeitungseinheiten (1, 2), die jeweils eine Spindel (9, 10) für Werkzeuge aufweisen, mit denen mindestens ein Werkstück bearbeitbar ist, das in einer auf einer Palette (23, 24; 34) aufgenommenen Spannvorrichtung, die auf einem um eine vertikale Achse (16) drehbaren Rundtischträgers (15) vorgesehen ist, gehalten ist und sich in einer Bearbeitungsstation (25) befindet, die zwischen den beiden Bearbeitungseinheiten (1, 2) angeordnet ist, mit deren Werkzeugen das Werkstück gleichzeitig bearbeitbar ist,
**dadurch gekennzeichnet, dass** die Palette (23, 24; 34) mittels des Rundtischträgers (15) in die Bearbeitungsstation (25) zwischen den beiden vorzugsweise identisch ausgebildeten Bearbeitungseinheiten (1, 2) transportierbar ist, dass die Drehachse (16) des Rundtischträgers (15) mit Abstand von einer zwischen den beiden Bearbeitungseinheiten (1,2) befindlichen Mittelachse (17) vorgesehen und im Bereich zwischen den beiden Bearbeitungseinheiten (1,2) liegt, dass die Drehachse (16) des Rundtischträgers (15) und die Mittelachse (17) in einer Vertikalebene (33) liegen, die mittig zwischen den beiden Bearbeitungseinheiten (1,2) verläuft, und dass auf dem Rundtischträger (15) wenigstens zwei mit Abstand voneinander liegende Rundtische (18, 19) gelagert sind, die in Bezug auf den Rundtischträger (15) diametral einander gegenüberliegen und um zueinander parallele Achsen (20, 21) drehbar sind, die parallel zur Drehachse (16) des Rundtischträgers (15) liegen und gleichen Abstand von der Drehachse (16) haben.

2. Werkzeugmaschinengruppe nach Anspruch 1,
**dadurch gekennzeichnet, daß** die Drehachsen (16; 20, 21) des Rundtischträgers (15) und der vorteilhaft als Teiltische ausgebildeten Paletten (23, 24; 34) aufnehmenden Rundtische (18, 19) in einer gemeinsamen Ebene liegen, und daß vorzugsweise die Rundtische (18, 19) mit einer NC-Drehachse ausgerüstet und die Paletten (23, 24; 34) durch eine automatische Ladeeinrichtung (31, 35) förderbar sind.

3. Werkzeugmaschinengruppe nach einem der Ansprüche 1 bis 2,
**dadurch gekennzeichnet, daß** auf dem Rundtischträger (15) eine Trennwand (22) stehend angeordnet ist, die die Bearbeitungsstation (25) von einem Rüstplatz (26) oder einem Palettenspeicher (31) trennt.

4. Werkzeugmaschinengruppe nach einem der Ansprüche 1 bis 3,
**dadurch gekennzeichnet, daß** zumindest die eine, vorzugsweise beide Bearbeitungseinheiten (1, 2) in mehreren Freiheitsgraden NC-gesteuert beweglich sind, vorzugsweise in einem dreiachsigen kartesischen Koordinatensystem, und daß vorteilhaft zumindest die eine, vorzugsweise beide Bearbeitungseinheiten (1, 2) rotatorische Freiheitsgrade aufweisen.

5. Werkzeugmaschinengruppe nach einem der Ansprüche 1 bis 4,
**dadurch gekennzeichnet, daß** der Rundtischträger (15) als Palettenwechsler und/oder die Bearbeitungsstation (25) als Spänefangraum mit Schutztüren ausgebildet sind.

6. Werkzeugmaschinengruppe nach einem der Ansprüche 1 bis 5,
**dadurch gekennzeichnet, daß** in die Spindeln (9, 10) der Bearbeitungseinheiten (1, 2) räumliche Revolverköpfe (27) und/oder Mehrspindelköpfe (28) einsetzbar sind, und daß vorzugsweise den Spindeln (9, 10) vorteilhaft um horizontale Achsen drehbare Werkzeugmagazine (11, 12) und/oder als Kettenmagazine mit einer oder mehreren Schleifen ausgebildete Werkzeugmagazine (11a, 12a) zugeordnet sind, und daß vorzugsweise die Werkzeuge mittels eines ein- oder zweiarmigen schwenkbaren Greifers (41) zwischen Magazin und Spindeln (9, 10) der Bearbeitungseinheiten (1, 2) ausgewechselt werden.

7. Werkzeugmaschinengruppe nach einem der Ansprüche 1 bis 6,
**dadurch gekennzeichnet, daß** die Achsen (29, 30) der Spindeln (9, 10) Tangenten einer gedachten Kreisschar bilden, deren gemeinsames Zentrum in der Achse (16) des Rundtischträgers (15) liegt.

8. Werkzeugmaschinengruppe nach einem der Ansprüche 1 bis 7,
**dadurch gekennzeichnet, daß** die Bearbeitungseinheiten (1, 2) bezüglich Arbeitsbereich, Geschwindigkeit von Linear- und Drehachsen sowie Leistung an unterschiedliche Bearbeitungsaufgaben anpaßbar sind.

9. Werkzeugmaschinengruppe nach einem der Ansprüche 3 bis 8,
**dadurch gekennzeichnet, daß** der Palettenspeicher (31) um eine parallel zur Achse (16) des Rundtischträgers (15) liegende Achse (32) drehbar ist, die vorteilhaft mit der Drehachse (16) des Rundtischträgers (15) und den Drehachsen (20, 21) der Rundtische (18, 19) in einer gemeinsamen, vorteilhaft durch die Bearbeitungsstation (25) verlaufenden Ebene (33) liegt.

10. Werkzeugmaschinengruppe nach einem der Ansprüche 1 bis 9,
**dadurch gekennzeichnet, daß** die Bearbeitungseinheiten (1, 2) unabhängig voneinander antreibbar sind und/oder sequentiell, zum Beispiel bei jeweils unterschiedlichen Winkelstellungen der Rundtische (18, 19), arbeiten.

11. Werkzeugmaschinengruppe nach einem der Ansprüche 1 bis 10,
**dadurch gekennzeichnet, daß** die Paletten (38) in einem Linearspeicher (39) speicherbar sind, und daß vorzugsweise zwischen dem Linearspeicher (39) und den Bearbeitungseinheiten (1, 2) eine Fördereinrichtung (36, 37, 40) für die Paletten (38) angeordnet ist.

## Claims

1. Machine tool layout with two machining units (1, 2) facing one another, respectively comprising a spindle (9, 10) for tools, with which at least one workpiece can be machined which is supported by a fixture, held by a pallet (23, 24; 34), disposed on a rotary table carrier (15), rotatable around a vertical axis (16), and the workpiece being in a machining station (25), positioned between the two machining units (1, 2), with the tools of which the workpiece is simultaneously machinable,
**characterized in that** the pallet (23, 24; 34) is transportable via the rotary table carrier (15) in the machining station (25) between the two machining units (1, 2), preferably identically formed, that the rotation axis (16) of the rotary table carrier (15) is provided at a certain distance from a centre line (17), between the two machining units (1, 2) and is situated in the area between the two machining units (1, 2), that the rotation axis (16) of the rotary table carrier (15) and the centre line (17) are situated within a vertical plane (33), proceeding centrically between the two machining units (1, 2), and that onto the rotary table carrier (15) are mounted at least two rotary tables (18, 19), positioned at a certain distance from one another, situated diametrically opposing each other with respect to the rotary table carrier (15) and rotatable around axes (20, 21), parallel to each other, situated parallel to the rotation axis (16) of the rotary table carrier (15) and having the same distance from the rotation axis (16).

2. Machine tool layout according to claim 1,
**characterized in that** the rotation axes (16; 20, 21) of the rotary table carrier (15) and the rotary tables (18, 19), holding the pallets (23, 24; 34), advantageously formed as indexing tables, are situated within a common plane and that preferably the rotary tables (18, 19) are equipped with an NC-rotary axis and the pallets (23, 24; 34) can be conveyed by an automatic loading means (31, 35).

3. Machine tool layout according to one of the claims 1 to 2,
**characterized in that** on the rotary table carrier (15) a standing dividing wall (22) is provided, separating the machining station (25) from a loading station (26) or a pallet pool (31).

4. Machine tool layout according to one of the claims 1 to 3,
**characterized in that** at least one, preferably both machining units (1, 2) are movable in several degrees of freedom controlled by NC-mode, preferably within a triaxial Cartesian coordinate system and that advantageously at least one, preferably both machining units (1, 2) comprising of rotary degrees of freedom.

5. Machine tool layout according to one of the claims 1 to 4,
**characterized in that** the rotary table carrier (15) is designed as pallet changer and/or the machining station (25) as a chip-trap space with safety doors.

6. Machine tool layout according to one of the claims 1 to 5,
**characterized in that** spatial revolver turrets (27) and/or multi spindle heads (28) can be inserted into the spindles (9, 10) of the machining units (1, 2) , and that preferably tool magazines (11, 12) advantageously rotatable around horizontal axes and/or tool magazines (11 a, 12a), designed as chain magazines assigned to the spindles (9, 10), with one or several loops and that preferably the tools are changed by means of a one- or two-armed pivotable gripper (41) between the magazine and spindles (9, 10) of the machining units (1, 2).

7. Machine tool layout according to one of the claims 1 to 6,
**characterized in that** the axes (29, 30) of the spindles (9, 10) form tangents of an imaginary family of circles, the common centre of which is situated in the axis (16) of the rotary table carrier (15).

8. Machine tool layout according to one of the claims 1 to 7,
**characterized in that** the machining units (1, 2) are adaptable with regard to work space, speed of linear and rotary axes as well as capacity to various machining jobs.

9. Machine tool layout according to one of the claims 3 to 8,
**characterized in that** the pallet pool (31) is rotatable about an axis (32), located parallel to the axis (16) of the rotary table carrier (15) and advantageously situated with the rotary axis (16) of the rotary table carrier (15) and the rotary axis (20, 21) of the rotary tables (18, 19) in a common plane (33), which advantageously runs through the machining station (25).

10. Machine tool layout according to one of the claims 1 to 9,
**characterized in that** the machining units (1, 2) can be driven independently from one another and/or work sequentially, for example at respectively different angular positions of the rotary tables (18, 19).

11. Machine tool layout according to one of the claims 1 to 10,
**characterized in that** the pallets (39) are storable within a linear magazine (39) and preferably between the linear magazine (39) and the machining unit (1, 2) a conveyor (36, 37, 40) for the pallets (38) is provided.

## Revendications

1. Disposition de machine-outils avec deux unités d'usinage (1, 2), opposées l'une par rapport à l'autre, comprenant respectivement une broche (9, 10) pour outils, avec lesquelles au moins une pièce est usinable, laquelle est supportée par un dispositif de fixation, monté sur une palette (23, 24; 34), laquelle est prévue sur un support de table circulaire (15) mobile autour d'un axe vertical (16) et est située dans une station d'usinage (25), laquelle est disposée entre les deux unités d'usinage (1, 2) , à l'aide des outils desquelles la pièce est usinable simultanément,
**caractérisée en ce que** la palette (23, 24; 34) est transportable par l'intermédiaire du support de la table circulaire (15) dans la station d'usinage (25) entre les deux unités d'usinage de préférence de forme identique et que l'axe de rotation (16) du support de table circulaire (15) est prévu à distance d'un axe central (17) situé entre les deux unités d'usinage (1, 2) et est situé dans la zone entre les deux unités 'usinage (1, 2) et que l'axe de rotation (16) du support de table circulaire (15) et l'axe central (17) sont situés dans un plan vertical (33) qui se trouve centriquement entre les deux unités d'usinage (1, 2) et que sur le support de table circulaire (15) au moins deux tables circulaires (18, 19) sont montées en position couchée à distance l'une à l'autre, lesquelles sont opposées diamétralement par rapport au support de table circulaire (15) et sont rotatives sur des axes parallèles (20, 21) l'un à l'autre, lesquels sont situés parallèlement à l'axe de rotation (16) du support de la table circulaire (15) et sont à distance égale de l'axe de rotation (16).

2. Disposition de machines-outils selon revendication 1,
**caractérisée en ce que** les axes de rotation (16; 20, 21) du support de table circulaire (15) et des tables circulaires (18, 19) recevant les palettes (23, 24; 34) et avantageusement formées comme tables graduées, sont situées dans un plan commun et que de préférence les tables circulaires (18, 19) sont munies d'un axe de rotation de commande numérique et que les palettes (23, 24; 34) sont transportables par une installation de chargement automatique (31, 35).

3. Disposition de machines-outils selon une des revendications 1 à 2,
**caractérisée en ce que** sur le support de table circulaire (15) une paroi de séparation (22), est disposée debout laquelle sépare la station d'usinage (25) d'un poste de mise en route (26) ou d'un magasin de palettes (31).

4. Disposition de machines-outils selon une des revendications 1 à 3,
**caractérisée en ce que** au moins une, de préférence les deux unités d'usinage (1, 2) sont mobiles en plusieurs degrés de liberté par commande numérique, de préférence dans un système de coordination triaxial cartésien et qu'avantageusement au moins l'une, de préférence les deux unités d'usinage (1, 2) comprennent des degrés de liberté rotatifs.

5. Disposition de machines-outils selon une des revendications 1 à 4,
**caractérisée en ce que** le support de table circulaire (15) est formé comme changeur de palettes et/ou la station d'usinage (25) est formée comme espace collecteur de copeaux avec des portes de protection.

6. Disposition de machines-outils selon une des revendications 1 à 5,
**caractérisée en ce que** dans les broches (9, 10) des unités d'usinage (1, 2) des tourelles revolver tridimensionnelles (27) et/ou des têtes multibroches (28) sont insérables et que de préférence des magasins d'outils (11, 12) avantageusement rotatifs sur essieux horizontaux et/ou des magasins d'outils (11a, 12a) construits comme magasin à chaîne avec une ou plusieurs boucles sont adjoints aux broches (9, 10) et que de préférence les outils sont échangés à l'aide d'un preneur (41) entre un ou deux bras pivotable entre le magasin et les broches (9, 10) des unités d'usinage (1, 2).

7. Disposition des machines-outils selon une des revendications 1 à 6,
**caractérisée en ce que** les essieux (29, 30) des broches (9, 10) représentent des tangentes d'une famille de cercles imaginaire dont le centre commun est situé dans l'essieu (16) du support de table circulaire (15).

8. Disposition des machines-outils selon une des revendications 1 à 7,
**caractérisée en ce que** les unités d'usinage (1, 2) sont adaptable à des tâches d'usinage différentes par rapport à la zone de travail, à la vitesse d'essieux linéaires et rotatifs ainsi qu'à la puissance.

9. Disposition des machines-outils selon une des revendications 1 à 8,
**caractérisée en ce que** le magasin des palettes (31) est rotatif sur un essieu (32), situé parallèlement par rapport à l'essieu (16) du support de table circulaire (15), l'essieu (32) étant situé avantageusement avec l'essieu rotatif (16) du support de table circulaire (15) et les essieux rotatifs (20, 21) des tables circulaires (18, 19) dans un plan commun (33), se déroulant avantageusement à travers la station d'usinage (25).

10. Disposition de machines-outils selon une des revendications 1 à 9,
**caractérisée en ce que** les unités d'usinage (1, 2) sont entraînables indépendamment l'une de l'autre et/ou travaillent séquentiellement, par exemple sur des positions angulaires respectivement différentes des tables circulaires (18, 19).

11. Disposition des machines-outils selon une des revendications 1 à 10,
**caractérisée en ce que** les palettes (38) sont emmagasinables dans un magasin linéaire (39) et que de préférence entre le magasin linéaire (39) et les unités d'usinage (1, 2) un convoyeur (36, 37, 40) est ménagé pour les palettes (38).
